# EUROPÄISCHE PATENTSCHRIFT

(11) **EP 2 293 916 B1**
(45) Veröffentlichungstag und Bekanntmachung des Hinweises auf die Patenterteilung: **08.08.2012**
(21) Anmeldenummer: 09772183.1
(22) Anmeldetag: 03.07.2009
(51) Int. Cl.: B29C 45/14, B32B 15/06, B32B 15/08, B32B 25/08, B32B 27/08, C08J 5/12, C09J 107/00, C09J 109/00, C09J 109/02

(54) **HITZE-AKTIVIERBARE KLEBEMASSEN ZUR STEIGERUNG DER VERBUNDFESTIGKEIT ZWISCHEN KUNSTSTOFF UND METALLEN IN SPRITZGUSSBAUTEILEN**
HEAT ACTIVATABLE ADHESIVES FOR INCREASING THE BOND STABILITY BETWEEN PLASTIC AND METALS IN DIE CASTING COMPONENTS
PÂTE COLLANTE ACTIVABLE THERMIQUEMENT, DESTINÉE À AUGMENTER LA RÉSISTANCE D'UNE LIAISON COMPOSITE ENTRE MATIÈRE PLASTIQUE ET MÉTAUX DANS DES PIÈCES MOULÉES PAR INJECTION

(30) Priorität: 03.07.2008 DE 102008031196
(43) Veröffentlichungstag der Anmeldung: 16.03.2011
(73) Patentinhaber: TESA SE, 20253 Hamburg (DE)
(72) Erfinder: HUSEMANN, Marc, 22559 Hamburg (DE); KOOP, Matthias, 22848 Norderstedt (DE)
(86) Internationale Anmeldenummer: PCT/EP2009/004819
(87) Internationale Veröffentlichungsnummer: WO 2010/000483

(56) Entgegenhaltungen:
- WO-A1-2006/128629
- WO-A1-2006/131214
- WO-A1-2007/012656
- WO-A2-2005/061203
- DE-U1- 7 808 296
- DE-U1- 29 520 505
- KÄUFER ET AL: "Arbeiten mit Kunststoffen" ARBEITEN MIT KUNSTSTOFFEN, KNAPP VERLAG, DE, 1. Januar 1981 (1981-01-01), Seite 221, XP002322008

## Beschreibung

Es wird ein Verfahren zur Herstellung eines Bauteils beschrieben, wobei das Bauteil zumindestens teilweise aus Metall besteht, wenigstens bereichsweise von einem Kunststoff umgeben ist, wobei zwischen Kunststoff und Metall ein Haftvermittler angeordnet ist. Als Haftvermittler wird eine Hitze-aktivierbare Klebemasse eingesetzt. Das Verfahren sieht vor, dass zunächst auf dem Metall die Hitze-aktivierbare Klebemasse aufgebracht wird, dann der Kunststoff aufgespritzt wird, so dass durch diesen Prozess die Vernetzungsreaktion der Hitze-aktivierbaren Klebemasse initiiert wird und somit sehr hohe Verklebungsfestigkeiten zwischen Kunststoff und Metall realisiert werden können.

Die Schriften WO 20061128629 A, WO 2006/131214 A und WO 20071012656 A befassen sich mit der Verklebung von Metallteilen auf Kunststoffen durch hitzeaktivierbare Klebemassen. Die DE 78 08 296 U beschreibt eine mit polymerem Material beschichtete Filtertrommel aus Metall, dadurch gekennzeichnet, dass die Beschichtung aus mehreren Schichten abwechselnd aus Hartgummi und Weichgummi, gegebenenfalls mit einer abschließenden Schicht aus einem Thermoplast oder Duroplast, besteht. Dabei können Bindemittel zwischen den Schichten eingesetzt werden. In keiner der vorgenannten Schriften werden Spritzgussverfahren angewendet.

Bauteile, die nach dem Spritzgussverfahren hergestellt werden, sind bereits seit langem bekannt. Bei diesem Verfahren werden grundsätzlich Kunststoffformteile aus Formmassen hergestellt. Dabei werden beispielsweise pulver- oder granulat-förmige Spritzgießmassen durch eine Spritzgießmaschine plastifiziert und mit hohem Druck in die formgebende Höhlung des Spritzgießwerkzeuges gespritzt. Typische Spritzgießmaschinen bestehen aus einer Spritzeinheit, die einen beheizten Zylinder, Kolben oder Schneckenkolben sowie Vorratsbehälter und Antriebsaggregate umfasst, die die Formmasse dosiert, plastifiziert und in das geschlossene Werkzeug einspritzt. Weiterhin umfasst die Spritzgießmaschine eine Schließeinheit, die das Werkzeug schließt und öffnet.

Ein weiterer Vorteil des Spritzgießverfahrens ist die Möglichkeit, mehrere Komponenten in einem Arbeitsgang zu verbinden, wobei gleiche als auch unterschiedliche Werkstoffe miteinander verbunden werden. In diesem Zusammenhang sei auf die Hybridtechnik und die Insert- und Outserttechnik hingewiesen, die das Einlegen von metallischen Strukturen in ein Spritzgießwerkzeug ermöglicht. Hiermit wird das Über- oder Umspritzen von metallischen Strukturen mit Thermoplasten ermöglicht.

Mit der Inserttechnik wird das Einbetten von Metallteilen in Formteile bezeichnet. Die zusätzlichen Teile, beispielsweise Gewindebuchsen, werden in das Werkzeug eingelegt und anschließend mit der Kunststoffformmasse umspritzt. Direkt umspritzt werden z.B. Einlegeteile wie Kugellager, Blechträger oder elektrische Komponenten. Der Kunststoffanteil überwiegt im Gewicht und Volumen dem Metall.
Im Gegensatz zur Inserttechnik stützt sich die Outserttechnik auf eine in das Werkzeug eingelegte meist metallische Trägerplatine, die hohe Anforderungen an Maßhaltigkeit, Steifigkeit und Festigkeit genügen muss. In eingestanzte Aufnahmelöcher dieser Trägerplatine können dann unterschiedliche Funktions- und Verbindungselemente aus Kunststoff, wie Lager, Gleitschienen, Schnappverbindungen, Anschläge und Einschraubungen formschlüssig gespritzt werden.
Spritzgegossene Kunststoff-Metall Hybride nutzen synergetisch die Eigenschaften der beteiligten Verbundpartner, wodurch eine rationelle Fertigung von multifunktionalen Leichtbaustrukturen ermöglicht wird. Die Kombination der Vorteile jeder einzelnen Werkstoffgruppe ist das Ziel bei der Anwendung dieser Technik. So können z.B. dünnwandige Blechprofile durch das Aufbringen geeigneter Kunststoffstrukturen versteift werden, indem der Vorteil des geringeren spezifischen Gewichtes der Kunststoffkomponente mit den für die jeweilige Anwendung relevanten Eigenschaften der Metallkomponente kombiniert wird. Zur Erhöhung der mechanischen Belastbarkeit der Hybridstrukturen ist eine optimale Kraftübertragung und -verteilung zwischen den Komponenten anzustreben. Eine Möglichkeit besteht hier, dass die Kunststoffschmelze in Öffnungen des Metallteils eindringt und dort eine dauerhafte feste Verbindung eingeht.

Allgemein werden solche Bauteile z.B. zur Herstellung von Karosserieteilen im Automobilbau, wie Frontends eingesetzt, oder für metallische Pins, die in Steckergehäusen ummantelt werden, sowie für elektronische Schaltgeräte. Ein neuer Trend besteht in der Anwendung für Mobiltelefone. Hier ist in den letzten Jahren ein Designtrend zu immer flacheren Ausführungen entstanden. Dadurch werden die Anforderungen an die eingesetzten Kunststoffe immer höher. Die Kunststoffe werden daraus resultierend immer härter. Dies kann durch neue Polymerformulierungen ermöglicht werden, oder durch Metallverstärkungen innerhalb dieser Kunststoffe.

Die so dringend benötigten Metall-verstärkten Materialien sind aber nicht so einfach herzustellen. Bei den zuvor beschriebenen Herstellungsmethoden bildet sich in der Schmelze an der Grenzfläche an der Grenzfläche zum Metall beim Auftreffen des thermoplastischen Kunststoffs auf dem Metall eine Grenzfläche aus Kunststoff, deren Temperatur deutlich unterhalb des thermoplastischen Kunststoffs liegt. Es bildet sich somit eine dünne Haut aus abgeschrecktem thermoplastischen Kunststoff aus. Diese Schicht weist aber eine nur sehr schlechte Haftung auf dem Metall auf. Anschließend verringert sich unter Abkühlen im Spritzgießwerkzeug das Volumen des Bauteils. Durch den Volumenschwund wird aber wiederum Stress erzeugt, der eine zumindestens teilweise Ablösung des Kunststoffes vom Metall ermöglicht. Somit befinden sich Lufteinschlüsse zwischen Metall und Kunststoff, die wiederum die Haftung weiter verringern. Durch diese mangelnde Haftung lassen sich kaum Zug- und Scherspannungen zwischen Kunststoff und Metall aufbringen.
Ein weiteres Problem sind unterschiedliche thermische Ausdehnungskoeffizienten zwischen Metall und Kunststoff. Dies kann ein Problem während des Herstelfungsverfahrens sein, da hier in dem Prozess nochmals zusätzlich Spannung zwischen Metall und Kunststoff aufgebaut wird. Es kann aber auch ein Problem in der Anwendung darstellen, wenn unterschiedliche Temperaturen auf das Bauteil in kurzer Zeit aufgebracht werden und so Spannungen entstehen.
Um Spalte zu minimieren ist ein Stand der Technik, dass in die Spalte zwischen Metall und Kunststoff Vergussmassen auf Basis von Silikonen oder Epoxidharzen eingebracht werden. Diese können verlaufen und Aushärten sowie unter optimalen Bedingungen eine Haftung zwischen Metall und Kunststoff aufbauen.
Ein weiterer Stand der Technik ist, dass zur Abdichtung Schmelzkleber auf dem Metall aufgebracht werden. Hier haftet der Schmelzkleber auf dem Metall und der umspritzte Kunststoff anschließend auf dem Schmelzkleber. Das Verfahren besitzt aber den Nachteil, dass Schmelzkleber nicht vernetzt sind und somit eine nur begrenzte Lösemittelbeständigkeit und thermische Festigkeit aufweisen.

Die DE 295 20 505 U beschreibt ein Spritzgussverfahren, bei dem Kunsttoff an ein Metall gespritzt wird. Vorgeschlagen wird eine dauerelastische Schicht zwischen den Materialien, bei der das elastische Material selbstklebrig ausgestaltet sein kann. In der Schrift sind keine durch Hitzeaktivierung haftklebrig werdenden Schichten offenbart.

Der Einsatz von thermoplastischen Beschichtungen für metallische Substrate ist auch aus US 6,494,983 bekannt. Hier werden Stahlbehälter anstatt einer PVC-Auskleidung mit einer Schicht aus thermoplastischen Kunststoff versehen. Der thermoplastische Kunststoff ist aber nicht diffusionsdicht und daher kann bei der Anwesenheit von aggressiven Medien das darunterliegende Metall korrodieren. Als Korrosionsschutz wird das Metall daher mit duroplastischen Korrosionsschutz ausgestattet, auf dem aber der thermoplastische Kunststoff nicht haftet. Daher wird dem Duroplasten zum Teil thermoplastisches Kunststoffpulver zugesetzt, so dass dann bei der anschließenden Kunststoffbeschichtung eine Haftung zwischen dem Korrosionsschutz und dem Kunststoff ausgebildet wird.

Eine Weiterentwicklung dieser Form wird in WO 2005 061203 beschrieben. Hier wird ein Verfahren beschrieben, welches zwischen dem Kunststoff und der Metallschicht einen thermoplastischen Haftvermittler vorsieht. Der Haftvermittler weist eine derartige Elastizität auf, dass Spannungen zwischen Metall und Kunststoff kompensiert und abgebaut werden können. Weiterhin weist der Haftvermittler eine Schmelztemperatur gleich oder kleiner des Kunststoffes auf. Der thermoplastische Haftvermittler kann ein oder zweischichtig aufgebaut sein. In dem beschriebenen Verfahren sind aber bereits inhärente Nachteile beschrieben. So weisen die bevorzugt als Haftvermittler eingesetzten Thermoplasten die Tendenz auf, Wasser zu absorbieren. Dies führt während der Beschichtung mit der Kunststoffschmelze zu Wassergasbildung, welche wiederum Lufteinschlüsse verursacht und so die Haftung zwischen Metall und Kunststoff minimiert. Daher müssen die Thermoplaste mit einer Schutzgasglocke vor Feuchtigkeit und Sauerstoff geschützt werden. Ein weiterer Nachteil ist bei teilweisen Verklebungen die mangelnde Dimensionsstabilität von thermoplastischen Haftvermittlern. So befinden sich die thermoplastischen Haftvermittler in einem Schmelzzustand, der mit einer sehr geringen Viskosität verbunden ist. Kühl nun das Spritzugßbauteil aus, so entsteht durch den Volumenschrumpf ein innerer Druck, der den thermoplastischen Haftvermittler zum Ausfließen bringt. Weiterhin kann eine ungleichmäßige Verteilung des thermoplastischen Haftvermittlers daraus resultieren. Ein weiterer Nachteil der thermoplastischen Haftvermittler ist deren Härte, um hohe Verkebungsfestigkeiten zu realisieren. Dies trifft ebenfalls auf die zitierten Duroplasten zu. Dies ist aber besonders kritisch im Mobilfunktelefon Bereich. Hier wird eine Vielzahl von Falltest durchgeführt, so dass der Haftvermittler zwischen dem Metall und dem Kunststoffverbund ebenfalls gute schockabsorbierende und elastische Eigenschaften aufweisen sollte.

Die beschriebenen Nachteile verdeutlichen, dass Bedarf für die Verbesserung eines solchen Spritzgussverfahrens mit Metall/Kunststoffverbunden besteht.

Überraschender Weise wurde gefunden, daß diese Spritzgussverfahren unter Verwendung spezifischer Hitze-aktivierbaren Klebemassen als Haftvermittler zwischen Metall und Kunststoff deutlich verbessert werden können.

Die Erfindung betrifft ein Verfahren zur Herstellung eines Bauteils, welches wenigstens bereichsweise aus Metall gebildet ist, wobei
- zunächst ein Metallteil wenigstens bereichsweise mit einem aus einem hitzeaktivierbaren elastischen Material bestehenden Haftvermittler versehen wird, der sich zusammensetzt aus
   - zumindest 30 Gew.%, maximal 70 Gew.% einer Naturkautschuk- und/oder Synthesekautschukkomponente,
   - zumindest 30 Gew.%, maximal 70 Gew.% zumindest einer Reaktivharzkomponente, gewählt aus der Gruppe umfassend Epoxyharze, Novolak-Harze, Melamin-Herze, Terpenphenol-Harze, Phenolharze, Phenolresolharze, Polyisocyanate, so dass die Reaktivharzkomponente bei Temperaturen oberhalb 120 °C eine Vernetzungsreaktion mit sich selbst, mit anderen Reaktivharzen oder mit dem Naturkautschuk und/oder Synthesekautschuk initiiert,
   wobei der Haftvermittler derart hitzeaktivierbar ist, dass er durch Wärmezufuhr einen haftklebrigen Zustand einnimmt,
- das mit dem Haftvermittler ausgestattete Metallteil im Spritzgussverfahren wenigstens teilweise mit einer thermoplastischen Kunststoffschicht umspritzt wird, wodurch Wärme eingetragen wird,
- so dass der Haftvermittler aktiviert wird und auf dem Metallteil und auf dem thermoplastischen Kunststoff haftet, und somit zwischen dem metallischen Bereich und der Kunststoffschicht eine stoffschlüssige Verbindung erzeugt wird.

Man erhält so ein Bauteil, welches wenigstens bereichsweise aus Metall gebildet ist, wobei der metallische Bereich wenigstens teilweise mit einer thermoplastischen Kunststoffschicht umspritzt ist, und zwischen der Kunststoffschicht und dem metallischen Bereich wenigstens bereichsweise eine wenigstens an seiner Kunststoffschicht zugewandten Seite aus einem Wärme-aktivierbaren elastischen Material bestehende Haftvermittterschicht angeordnet ist, mittels der zwischen dem metallischen Bereich und der Kunststoffschicht eine stoffschlüssige Verbindung vorliegt, wobei sich der elastische Haftvermittler aus
- zumindestens 30 Gew.-%, aber maximal 70 Gew.-% einer Naturkautschuk und/oder Synthesekautschuk Komponente
- zumindestens 30 Gew-%, aber maximal 70 Gew.-% zumindestens einer Reaktivharzkomponente,
- die Reaktivharzkomponente bei Temperaturen oberhalb 120°C eine Vernetzungsreaktion mit sich selbst, mit anderen Reaktivharzkomponenten oder mit dem Naturkauschuk und/oder Synthesekautschuk initiiert
zusammensetzt.

Die Unteransprüche betreffen weitere vorteilhafte Ausführungsformen der Erfindung . In einer bevorzugten Ausführungsform der Erfindung besitzt die Reaktivharzkomponente die Möglichkeit, auch mit dem im Spritzgussverfahren zu verarbeitenden Kunststoff eine chemische Reaktion einzugehen.

### Hitze-aktivierbarer elastischer Haftvermittler

Die Hitze-aktivierbaren elastischen Haftvermittler Klebemassen können in zwei Kategorien unterteilt werden:
a) Haftvermittler, basierend auf Naturlcautschuken
b) Haftvermittler, basierend auf Synthesekautschuken.

Für die Haftvermittler basierend auf Naturkautschuk wird der Naturkautschuk bis zu einem Molekulargewicht (Gewichtsmittel) nicht unter etwa 100.000 Dalton, bevorzugt nicht unter 500.000 Dalton gemahlen und additiviert.
Bei Kautschuk als Ausgangsmaterial für den Haftvermittler sind weite Variationsmöglichkeiten gegeben. Es können auch Naturkautschuke mit Synthesekautschuken geblendet werden.
Als Naturkautschuk sind grundsätzlich alle erhältlichen Qualitäten wie zum Beispiel Crepe-, RSS-, ADS-, TSR- oder CV-Typen, je nach benötigtem Reinheits- und Viskositätsniveau einsetzbar.
Der Synthesekautschuk oder die Synthesekautschuke können bevorzugt aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), Nitrilkautschuke oder der Acrylatkautschuke (ACM) gewählt werden.
Natürlich lassen sich aber auch alle weiteren, dem Fachmann bekannten Natur und Synthesekautschuke zur Herstellung von Klebemassen verwenden, so wie sie z.B im "Handbook of Pressure Sensitive Adhesive Technology" von Donatas Satas (van Nostrand, New York 1989) aufgeführt sind.

In einer sehr bevorzugten Form basiert der Haftvermittler auf Nitrilkautschuk oder Nitrilbutadienkautschuken.

Nitrilbutadienkautschuke sind unter Europrene™ von Eni Chem, oder unter Krynac™ und Perbunan™ von Bayer, oder unter Breon™ und Nipol™ von Zeon erhältlich. Hydrierte Nitril-Butadien Kautschuke sind unter Therban™ von Bayer und unter Zetpol™ von Zeon erhältlich. Nitrilbutadienkautschuke werden entweder heiß oder kalt polymerisiert, wobei die heiß formulierten Typen in der Regel einen höheren Verzweigungsgrad aufweisen, der die Verklebungsfestigkeit im allgemeinen positiv beeinflusst. Diese Typen sind in bevorzugter Weise Bestand des erfindungsgemäßen Haftvermittlers..

Die Nitrilkautschuke weisen in einer sehr bevorzugen Auslegung der Erfindung einen Acrylnitril von 18 bis 51 Gew.-.% auf. Um eine vollständige Phasenseparierung mit den Reaktivharzen zu vermeiden, sollte der Acrylnitrilanteil bei größer 18 Gew.-% wiederum bezogen auf den Gesamtanteil liegen.
Ein weiteres Kriterium für den Nitrilkautschuk ist die Mooney-Viskosität. Da eine hohe Flexibilität für das Spritzgußverfahren gewährleistet bleiben muss, sollte die Mooney-Viskosität unterhalb 100 liegen (Mooney ML 1+4 bei 100 °C). Um eine möglichst hohe Dimensionsstabilität des Haftvermittlers zu erhalten, sollte die Moony Viskosität oberhalb von 50 liegen (Mooney ML 1+4 bei 100 °C). Kommerzielle Beispiele für solche Nitrilkautschuke sind z.B. Nipol™ N917 der Firma Zeon Chemicals.

Die Carboxyl-, Amin-, Epoxy- oder Methacrylat-terminiertem Nitrilbutadienkautschuke können als Zusatzkomponenten eingesetzt werden. Solche Elastomere weisen besonders bevorzugt ein Molekulargewicht von M_{w} < 20.000 g/mol und einen Acrylnitrilanteil von 5 Gew.-% bis 30 Gew.-% auf. Um eine optimale Mischbarkeit zu erzielen, sollte der Acrylnitril zumindestens bei größer 5 % wiederum bezogen auf den Gesamtanteil Elastomer liegen.
Kommerzielle Beispiele für solche terminierten Nitrilkautschuke sind z.B. Hycar™ der Firma Noveon.
Für Carboxy-terminierte Nitrilbutadienkautschuke werden bevorzugt Kautschuke eingesetzt mit einer Carbonsäurezahl von 15 bis 45, sehr bevorzugt von 20 bis 40. Die Carbonsäurezahl wird als Wert in Milligramm KOH angegeben, der benötigt wird um die Carbonsäure komplett zu neutralisieren.

Für Amin-terminierte Nitrilbutadienkautschuke werden besonders bevorzugt Kautschuke mit einem Amin-Wert von 25 bis 150, mehr bevorzugt von 30 bis 125 eingesetzt. Der Amin-Wert bezieht sich auf die Amin-Äquivalente, die durch Titration gegen HCl in ethanolischer Lösung bestimmt werden. Der Amin-Wert wird dabei auf Amin-Äquivalente pro 100 Gramm Kautschuk bezogen, aber letztendlich durch 100 geteilt.

Der Anteil der Reaktivharze im Haftvermittler beträgt zwischen 70 und 30 Gew.-%. Eine sehr bevorzugte Gruppe umfasst Epoxy-Harze. Das Molekulargewicht M_{w} der Epoxy-Harze variiert von 100 g/mol bis zu maximal 10000 g/mol für polymere Epoxy-Harze.

Die Epoxy-Harze umfassen zum Beispiel das Reaktionsprodukt aus Bisphenol A und Epichlorhydrin, Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Beispiele für kommerzielle aliphatische Epoxy-Harze sind z.B. Vinylcyclohexandioxide, wie ERL-4206, ERL-4221, ERL 4201, ERL-4289 oder ERL-0400 von Union Carbide Corp.

Als Novolak-Harze können z.B. eingesetzt werden, Epi-Rez™ 5132 von Celanese, ESCN-001 von Sumitomo Chemical, CY-281 von Ciba Geigy, DEN 431, DEN™ 438, Quatrex 5010 von Dow Chemical, RE 305S von Nippon Kayaku, Epiclon™ N673 von DaiNipon Ink Chemistry oder Epicote™ 152 von Shell Chemical.

Weiterhin lassen sich als Reaktivharze auch Melamin-Harze einsetzen, wie z.B. Cymel™ 327 und 323 von Cytec.

Weiterhin lassen sich als Reaktivharze auch Terpenphenolharze, wie z.B. NIREZ™ 2019 von Arizona Chemical einsetzen.

Weiterhin lassen sich in einer weiteren bevorzugten Auslegung als Reaktivharze auch Phenolharze, wie z.B. YP 50 von Toto Kasei, PKHC von Union Carbide Corp. und BKR 2620 von Showa Union Gosei Corp. einsetzen. Weiterhin lassen sich als Reaktivharze auch Phenolresolharze auch in Kombination mit anderen Phenolharzen einsetzen.

Weiterhin lassen sich als Reaktivharze auch Polyisocyanate, wie z.B. Coronate™ L von Nippon Polyurethan Ind., Desmodur™ N3300 oder Mondur™ 489 von Bayer einsetzen.

In einer weiteren Ausführung der Haftvermittler sind außerdem klebkraftsteigernde (klebrigmachende) Harze zugesetzt; sehr vorteilhaft zu einem Anteil von bis zu 20 Gew.-%, bezogen auf die Gesamtmischung des Haftvermittlers.

Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit den Natur- oder Synthesekautschuken kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Um die Reaktion zwischen den Reaktivharzen oder den Reaktivharzen und dem Natur- und/oder Synthesekautschuk zu beschleunigen, lassen sich auch optional Vernetzer und Beschleuniger in die Mischung zu additivieren.

Als Beschleuniger eignen sich z.B. Imidazole, kommerziell erhältlich unter 2M7, 2E4MN, 2PZ-CN, 2PZ-CNS, P0505, L07N von Shikoku Chem. Corp. oder Curezol 2MZ von Air Products. Weiterhin eignen sich als Vernetzer HMTA (Hexamethylentetramin) Zusätze. Für die Vernetzung von Epoxiden kann auch Dicyandiamid zugesetzt werden. Des Weiteren eignen sich di- oder multifunktionelle Maleinsäureanhydride als Vernetzungskomponenten.

Weiterhin lassen sich auch Amine, insbesondere tert.-Amine zur Beschleunigung einsetzen.

Neben Reaktivharzen lassen sich auch Weichmacher einsetzen. Hier können in einer bevorzugten Ausführung der Erfindung Weichmacher auf Basis Polyglykolethern, Polyethylenoxiden, Phosphatestern, aliphatische Carbonsäureester und Benzoesäureester eingesetzt werden. Weiterhin lassen sich auch aromatische Carbonsäureester, höhermolekulare Diole, Sulfonamide und Adipinsäureester einsetzen.

Weiterhin können optional Füllstoffe (z.B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, klebverstärkende Additive und Thermoplaste, Compoundierungsmittel und/oder Alterungsschutzmittel, z.B. in Form von primären und sekundären Antioxidantien oder in Form von Lichtschutzmitteln zugesetzt sein.

In einer weiteren bevorzugten Ausführungsform werden weitere Additive hinzugesetzt, wie z.B. Polyvinylformal, Polyacrylat-Kautschuke, Chloropren-Kautschuke, Ethylen-Propylen-Dien Kautschuke, Methyl-Vinyl-Silikon Kautschuke, Fluorsilikon Kautschuke, Tetrafluorethylen-Propylen-Copolymer Kautschuke, Butylkautschuke.
Polyvinylbutyrale sind unter Butvar™ von Solucia, unter Pioloform™ von Wacker und unter Mowital™ von Kuraray erhältlich. Polyacrylat Kautschuke sind unter Nipol AR™ von Zeon erhältlich. Chloropren Kautschuke sind unter Baypren™ von Bayer erhältlich. Ethylen-Propylen-Dien Kautschuke sind unter Keltan™ von DSM, unter Vistalon™ von Exxon Mobile und unter Buna EP™ von Bayer erhältlich. Methyl-Vinyl-Silikon Kautschuke sind unter Silastic™ von Dow Corning und unter Silopren™ von GE Silicones erhältlich. Fluorsilikon Kautschuke sind unter Silastic™ von GE Silicones erhältlich. Butyl Kautschuke sind unter Esso Butyl™ von Exxon Mobile erhältlich. Polyvinylformale sind unter Formvar™ von Ladd Research erhältlich.

In einer weiteren bevorzugten Ausführungsform werden Additive hinzugesetzt, wie z.B. thermoplastische Materialien aus der Gruppe der folgenden Polymere: Polyurethane, Polystyrol, Acrylnitril-Butadien-Styrol-Terpolymere, Polyester, Hart-Polyvinylchloride, Weich-Polyvinylchloride, Polyoxymethylene, Polybutylenterephthalate, Polycarbonate, fluorierte Polymere, wie z. B. Polytetrafluorethylen, Polyamide, Ethylenvinylacetate, Polyvinylacetate, Polyimide, Polyether, Copolyamide, Copolyester, Polyolefine, wie z.B. Polyethylen, Polypropylen, Polybuten, Polyisobuten, und Poly(meth)acrylate.
Die Aufzählung besitzt keinen Anspruch auf Vollständigkeit.

Die Klebkraft der Haftvermittler kann durch weitere gezielte Additivierung gesteigert werden. So lassen sich z.B. Polyimin- oder Polyvinylacetat-Copolymere auch als klebkraftfördernde Zusätze verwenden.

Für die Verwendung als Haftvermittler liegen die oben beschriebenen Klebmassenformulierungen in Folien-förmiger oder gelöster Form vor. Für die Handhabung im Spritzgussverfahren kann es von Vorteil sein, wenn die Haftvermittler vollflächig auf einem Trennpapier oder einer Trennfolie beschichtet sind. Der Haftvermittler weist bei Raumtemperatur eine nur geringe Haftklebrigkeit auf und muss durch Wärme aktiviert werden. Die Wärme überführt den Haftvermittler in den haftklebrigen Zustand und initiiert in einer sehr bevorzugten Auslegung eine Vernetzungsreaktion der Reaktivharze. Für die erfinderische Verwendung der zuvor beschriebenen Haftvermittler ist es weiterhin erforderlich, dass der Haftvermittler eine Aktivierungstemperatur unterhalb der Schmelztemperatur T_{S,A} des im Spritzgussverfahrens verarbeitenden Kunststoffes besitzt. Als Aktivierungstemperatur wird dabei die Temperatur definiert, ab der Haftvermittler eine Haftklebrigkeit aufweist. Für den Fall, dass der Haftvermittler nur eine statische Glasübergangstemperatur T_{G,A} aufweist, sollte diese ebenfalls unterhalb der Schmelztemperatur T_{S,A} des im Spritzguss zu verarbeitenden Kunststoffes liegen. Für den Fall, dass der Haftvermittler mehrere statische Glasübergangstemperaturen T_{G,A} aufweist, sollte in einer Auslegung zumindestens die niedrigste statische Glasübergangstemperatur T_{G,A} unterhalb der Schmelztemperatur T_{S,A} des im Spritzguss zu verarbeitenden Kunststoffes liegen, besonders bevorzugt aber zumindestens 2 der statischen Glasübergangstemperaturen T_{G,A}.

Für das erfinderische Verfahren kann es von Vorteil sein, wenn der Haftvermittler als folienförmiges Gebilde auf einer Trennfolie oder einem Trennpapier gestanzt wird. Die Filmdicke des Haftvermittlers beträgt in einer bevorzugten Auslegung zwischen 10 µm und 10 mm, mehr bevorzugt zwischen 25 µm und 1 mm.

Die Herstellung der Haftvermittler kann aus Lösung oder aus der Schmelze erfolgen. Für die Überführung in ein Folien-förmiges Gebilde kann ebenfalls aus Lösung oder aus der Schmelze beschichtet werden.

### Verfahren

Als gewählte Verfahren werden bevorzugt die Hybridtechnik oder die Insert- sowie Outserttechnik im Spritzgussverfahren eingesetzt. Als Maschinen lassen sich z.B. Arburg Allrounder V für die Umsetzung einsetzen.

In einem ersten Schritt werden die Metallteile mit dem Hitze-aktivierbaren Haftvermittler versehen. In einer Ausführung werden die Metallteile z.B. vollflächig mit dem Hitzeaktivierbaren Haftvermittler ausgestattet. Dies kann z.B. bei flachen Bauteilen mit einem Heizrollenlaminator erfolgen. Des Weiteren sind auch Heizpressen oder in manueller Form auch Bügeleisen denkbar. Es kann in Prinzip jedes Gerät verwendet werden, welches in der Lage ist Temperatur und Druck aufzubringen. Der Hitze-aktivierbare Haftvermittler liegt dabei in besonders bevorzugter Form auf einem Trennpapier oder Trennfolie vor. Nach der Wärmeaktivierung, haftet dann der Haftvermittler auf dem Metallbauteil. Je nach Design kann es dann erforderlich sein, dass die Bauteile noch einmal gestanzt werden müssen, bevor Sie im Spritzgussverfahren eingesetzt werden. Bevor das mit dem Haftvermittler ausgestattete Metallteil mit dem Kunststoff umspritzt wird, muss die eventuell noch vorhandene Trennfolie oder Trennpapier vom Haftvermittler entfernt werden.
In einer weiteren Ausführungsform wird der Hitze-aktivierbare Haftvermittler als Folienförmiges Gebilde bereits vorher gestanzt, um dann als Stanzling auf das Metallbauteil aufgetragen zu werden. Wiederum wird für diesen Auftragungsprozess Wärme und Druck benötigt.
In einer weiteren Form wird der Hitze-aktivierbare Haftvermittler aus Lösung aufgetragen. Hierbei wird im einfachsten Fall das Metallbauteil in eine Lösung des Hitze-aktivierbaren Haftvermittlers eingetaucht and anschließend in einem Trocknungsprozess vom Lösungsmittel befreit. Der Prozess kann aber auch kontrolliert durch Sprühbeschichtung oder Aufrakelung erfolgen.
Alle Aufbringungsmethoden sollten eine nur minimale Menge Wärmeenergie aufbringen um zu vermeiden, dass bereits in diesem Schritt die Vernetzungsreaktion der Reaktivharze initiiert wird.
In einigen Fällen kann es sogar ausreichend sein, wenn der Hitze-aktivierbare Haftvermittler nur ohne Wärme aufgelegt wird und so leicht haftet.

Die Dicke der auf dem metallischen Bereich aufgebrachten Hitze-aktivierbaren Haftvermittlerschicht variiert in Abhängigkeit vom jeweiligen Anwendungsfall und kann zwischen 10 µm und einigen Millimetern liegen, wobei die Dicke auf jeden Fall derart ausgewählt werden sollte, dass während des Spritzgießvorganges des thermoplastischen Kunststoffes dem Haftvermittler auf der Kunststoff und der Metall zugewandten Seite eine für die Wärmeaktivierung ausreichende Wärmemenge zugeführt wird, um eine optimale Haftung zwischen Metall, Haftvermittlerschicht und thermoplastischen Kunststoff zu ermöglichen.

Nach der Aufbringung werden die mit zumindestens Bereichsweise mit Hitzeaktivierbaren Haftvermittler versehenden Metallbauteile im Spritzgussverfahren mit thermoplastischen Kunststoffen umspritzt.
Als thermoplastische Kunststoffe für das Spritzgussverfahren lassen sich z.B. Polystyrol, Polymere aus Styrolacrylnitril (SAN), Acrylbutadienstyrol (ABS), Styrolbutadienstyrol (SBS), Acrylnitrilstyrolacrylnitril (ASA), Polyamid 6, Polyamid 6,6 , Polybutadienterephthalat, Polyoxymethylen, Polyphthalamid (PPA), Polyarylamid, Polycarbonat, Polycarbonat/ABS Blends, Polyacetal, Polyurethan, Polypropylen, Polyethylen, Polymethylmethacrylat, Polyethylenterephthalat, Polyvinylchlorid.
Die thermoplastischen Kunststoffe können auch mit bis zu 60% Glasfasern oder anderen Füllstoffen gefüllt sein.

Durch die Umspritzung mit thermoplastischen Kunststoffen wird Wärme eingetragen. Der Hitze-aktivierbare Haftvermittler wird durch diese Temperatur Wärmeaktiviert und baut sofort eine Haftung auf dem thermoplastischen Kunststoff auf. Zu dem steigt durch den Wärmeeintrag auch die Haftung zum Metallbauteil. Durch die Wärme wird die Vernetzungsreaktion initiiert und die Haftung wird weiter gesteigert. Durch die gewählte Zusammensetzung des Hitze-aktivierbaren Haftvermittlers bleibt als weiterer Vorteil die Dimensionsstabilität erhalten. Ein Grund hierfür ist der hohe elastische Anteil durch den oder die Kautschuke. Durch die hohe Dimensionsstabilität kann sich der Haftvermittler nicht unkontrolliert verteilen. Die Dimensionsstabilität bleibt auch unter Druck erhalten. Durch den Volumenschrumpf des thermoplastischen Kunststoffes unter Abkühlen wird ein hoher Druck aufgebaut, der auf den Haftvermittler wirkt. In einer weiteren möglichen Ausführungsform können die reaktiven Gruppen des Haftvermittlers mit der Wärme auch Reaktionen zwischen dem thermoplastischen Kunststoff und dem Haftvermittler eingehen. Für diesen Fall der Auslegung sollte der thermoplastische Kunststoff bevorzugt reaktive Gruppen aufweisen, wie z.B. Epoxy, Hydroxy, Säureanhydride oder Amine/Amide. Das Reaktivharz des Haftvermittlers muss dann dementsprechend gewählt werden, dass es eine chemische Verbindungsreaktion eingehen kann.
Des Weiteren kann der Haftvermittler ebenfalls einen Gegendruck zum Volumenschrumpf des thermoplastischen Kunststoffes aufbauen. Dies kann z.B. für Haftvermittler der Fall sein, die als Reaktivharzkomponente Phenol oder Phenol/Resol Harze enthalten, die dann z.B. mit HMTA zur Vernetzung gebracht werden. Hier entsteht in der Vernetzungsreaktion unter anderem Wasser, dass bei Temperaturen oberhalb 100°C als Wasserdampf eine hohen Druck erzeugt. Dies kann von Vorteil sein, wenn man den Volumenschrumpf des thermoplastischen Kunststoffes im Spritzgussverfahren minimieren möchte. Die Bauteile werden fester in die Formteile reingepresst und es bildet sich eine intensivere Haftausbildung zwischen den einzelnen Komponenten.

Ein weiterer Vorteil der in diesem Verfahren eingesetzten Haftvermittler besteht in der thermischen Nachreaktion. So besteht die Möglichkeit, dass bei anschließender thermischer Beanspruchung die Vernetzungsreaktion wieder reinitiiert wird und so über einen längeren Zeitraum die Vernetzung weiterläuft und innerhalb des Bauteils die Haftung zur Kunststoffseite und zum Metall weiter gesteigert wird.

Ein weiterer Vorteil liegt in dem elastischen Charakter des Haftvermittlers. Durch die gewählte chemische Zusammensetzung kann neben der Haftvermittler Funktion auch noch eine schockabsorbierende Wirkung übernommen werden. So kann insbesondere bei der Kombination aus Metall und relativ harten und spröden thermoplastischen Kunststoffen bei Schockbelastungen der Haftvermittler eine schockabsorbierende Wirkung übernehmen. Die Bauteile können dementsprechend in der späteren Verwendung stärker beansprucht werden. Somit bewirkt der Haftvermittler nicht nur eine Scher und Zugkraft-steigernde Wirkung, sondern auch eine Erhöhung der Schockfestigkeit. Dies kann von Vorteil sein in Automobilanwendungen, wo solche Spritzgussbauteile relativ viele Stöße absorbieren müssen und dies auch in einem weiten Temperatureinsatzgebiet. Vorteile existieren aber auch für Gehäuseanwendungen in Konsumgüterelektronikbauteilen. Auch diese Bauteile werden in einem weiten Temperaturbereich eingesetzt und müssen gegebenenfalls starke Schockeinwirkungen z.B. beim Fallenlassen kompensieren. Hier besteht mit dem beschriebenen Verfahren die einfache Möglichkeit, die Schockabsorbtionsfähigkeit solcher Bauteile zu erhöhen und gleichzeitig eine bessere Haftung zwischen Kunststoff und Metall zu realisieren.
Um die Verbundfestigkeit zwischen thermoplastischen Kunststoff und Metallteil weiter zu erhöhen, ist es gängige Praxis, die Metallteile mit Öffnung und/oder Vertiefung zu versehen, in die der plastifizierte Kunststoff während des Spritzgießvorganges eindringen oder durchdringen kann und so zusätzlich eine formschlüssige Verbindung ausbildet. Neben den erhöhten Arbeitsaufwand und den damit verbundenen höheren Kosten für die Fertigung solcher Metallkonstruktionen zeigt diese Methode insbesondere in punkto Maßhaltigkeit der Metallbauteile häufig Schwächen. Da die Vertiefungen/Öffnungen aus wirtschaftlichen Gründen meist aus Stanz- oder Prägeprozessen realisiert werden, kommt es häufig zu Verformungen der Metallstruktur , was zu Problemen bei der exakten Positionierung des Bauteils im Spritzgusswerkzeug und auch bei der späteren Endanwendung führen kann. In vielen Fällen kann durch die Verwendung des erfindungsgemäßen Haftvermittlers die Anzahl der erforderlichen konstruktiven Öffnungen reduziert bzw. auf diese vollständig verzichtet werden.
Insbesondere wenn dünnwandige Blechkonstruktionen oder filigrane Metallkonstruktionen umspritzt werden sollen, kommt es durch den hohen Einspritzdruck der thermoplastischen Kunststoffe häufig zu einer unerwünschten Verformung/Verschiebung der Metallkonstruktionen. Durch die Verwendung des erfindungsgemäßen Haftvermittlers kann in vielen Fällen der Einspritzdruck reduziert werden, wodurch die Metallstrukturen weniger mechanisch belastet werden und in Ihrer Dimension deutlich stabiler sind.

### Beispiele

### Testmethoden:

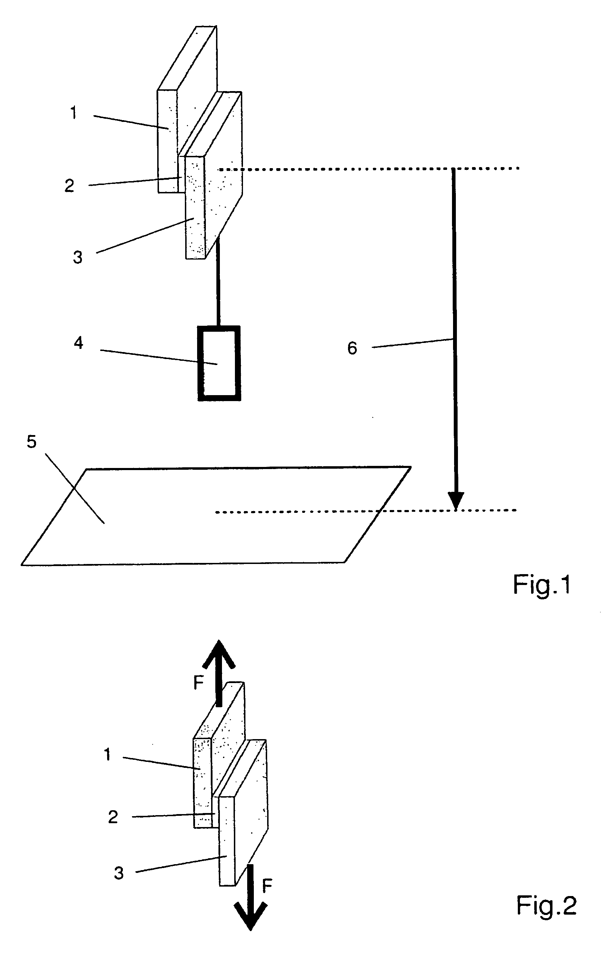

### Falltest A) (vgl. Fig. 1)

1 = Al-Platte
2 = Hitzeaktivierbare Folie
3 = PET-Platte
4 = Gewicht 50 g
5 = Stahlplatte
6 = Fallhöhe

Die Verklebungsfläche zwischen PET und Aluminiumplatte beträgt 2 cm². Es wird eine 1.5 mm dicke Al-Platte mit einer Breite von 2 cm mit einer Spritzgegossenen PET Platte (TEREZ PET 3000, Fa. TER Hell Plastic GmbH) mit einer Breite von 2 cm und einer Schichtdicke von 3 mm verbunden.
Anschließend wird der Falltest durchgeführt. An der PET-Platte wird ein 50 g schweres Gewicht befestigt. Dann wird der gesamte Verbund aus unterschiedlichen Höhen auf eine Stahlplatte fallen gelassen. Es wird die Höhe bestimmt, bei der die Verklebung mit der Hitzeaktivierbaren Haftvermittler noch den Stoß auffangen kann und die AI/PET Prüfkörper nicht auseinander fallen. Der Test wird weiterhin auch bei unterschiedlichen Temperaturen durchgeführt.

### Verklebungsfestigkeit B) (vgl. Fig. 2)

1 = Al-Platte
2 = Hitzeaktivierbare Folie
3 = PET-Platte

Die Verklebungsfestigkeit wird mit einem Dynamischen Schertest bestimmt. Die Verklebungsfläche beträgt 2 cm². Es wird eine 1.5 mm dicke Al-Platte mit einer Breite von 2 cm mit einer spritzgegossen PET Platte (TEREZ PET 3000, Fa. TER Hell Plastic GmbH) mit einer Breite von 2 cm und einer Schichtdicke von 3 mm verbunden.

Es werden die Prüfmuster mit einer Zugprüfmaschine mit 10 mm/min auseinandergerissen. Das Ergebnis wird in N/mm² angegeben und stellt die auf die Verklebungsfläche bezogene maximale Kraft dar, die gemessen wird, um die Prüfkörper (Aluminium und PET) von einander zu trennen. Die Messung wird bei 23°C und 50 % relativer Luftfeuchtigkeit durchgeführt:

Im Folgenden werden einige Formulierungen für die Haftvermittler beschrieben.

### Beispiel 1)

50 Gew.-% Breon N33 H80 (Nitrilkautschuk, 33 % Acrylnitril) der Fa. Zeon, 40 Gew.-% Phenol-Novolak Harz Durez 33040 abgemischt mit 8 % HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitzeaktivierbare Klebemasse wurde anschließend aus Lösung auf ein Glassinetrennpapier ausgestrichen und bei 100°C für 20 Minuten getrocknet. Nach der Trocknung betrug die Schichtdicke 100 µm.

### Beispiel 2)

25 Gew.-% Nipol N1094-80 (Nitrilkautschuk) der Fa. Zeon, 25 Gew.-% Breon N33 H80 (Nitrilkautschuk 33 % Acrylnitril) der Fa. Zeon, 40 Gew.-% Phenol-Novolak Harz Durez 33040 abgemischt mit 8 % HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitzeaktivierbare Klebemasse wurde anschließend aus Lösung auf ein Glassinetrennpapier ausgestrichen und bei 100°C für 20 Minuten getrocknet. Nach der Trocknung betrug die Schichtdicke 100 µm.

### Laminierung:

Beispiel 1 und 2 wurden mit einem Heizrollenlaminator mit einer Rollentemperatur von 125°C und einer Vortriebsgeschwindigkeit von 1 m/min bei einem Liniendruck von 2 bar auf die Aluminiumoberfläche laminiert. Die Verklebungsfläche betrug 1 x 2 cm, wobei der Al-Streifen eine Breite von 2 cm aufwies.

### Referenzbeispiel 1)

Für den Verklebungsprozess wurde nur das reine PET mit dem Aluminium verbunden.

### Referenzbeispiel 2)

Für den Verklebungsprozess wurde ein thermoplastischer Schmelzkleber auf Polyethylenbasis eingesetzt. Die Schichtdicke betrug 100 µm. Es wurde als Schmelzkleber abiflor 1070 von Abiflor AG auf Basis von LDPE eingesetzt mit einem Schmelzbereich von 102 - 106°C und einem Melt Index von 70 g/10 min bei 190°C und 16 kg.

### Verklebung:

Für die Verklebung wurde zunächst PET der Firma Ter Hell Plastic GmbH (TEREZ PET 3000) aufgeschmolzen. Das Material wurde zuvor bei 140°C 4 Stunden im Trockenluftofen getrocknet. Anschließend wurde auf 280°C mit einer Heizplatte aufgeschmolzen. Es wurde eine PET Platte mit 2 cm Breite 8 cm Länge und einer Schichtdicke von 3 mm ausgebildet durch eine spezielle Form und Ausübung von Druck durch eine Bürkle Presse. Anschließend wurde mit 5 bar die Al-Platte (1.5 mm Dicke, 2 cm breit, 8 cm lang, Haftvermittlerklebefläche 2 cm², Verklebung überlappend und endig) mit Beispiel 1 oder 2 bzw. Referenzbeispiel 1 oder 2 auf die PET Platte (s. Laminierung) aufgebracht. Der Verpressungsvorgang erfolgte bei 265°C innerhalb von 5 Sekunden. Anschließend wurde unter Druck (5 bar) ausgekühlt. Nach der Verklebung wurden die Seitenränder mechanisch vom eventuell überlaufenden Haftvermittler oder PET Kunststoff gereinigt, so dass zur Verklebung nur die Überlappungsfläche von 2 cm² vom Haftvermittler oder ohne Haftvermittler oder mit thermoplastischen Haftvermittler beiträgt.

### Ergebnisse:

Die Hitzeaktivierbaren Haftvermittler 1 und 2 wurden analog mit zwei Referenzbeispielen 1 und 2 ausgeprüft. Als Referenzbeispiel 1 wurde kein Haftvermittler eingesetzt. Als Referenzbeispiel 2 ein Haftvermittler basierend auf einem Thermoplasten. Alle Beispiele wurden unter den identischen Bedingungen aktiviert.
Nach der Verklebung wurden die Muster einem Falltest unterzogen. Die Ergebnisse sind in Tabelle 1 dargestellt. Die jeweilige Fallhöhe wird in cm angegeben.

**Tabelle 1:**

| Beispiele | Testmethode A bei rt |
|---|---|
| Referenz 1 | 45 cm |
| Referenz 2 | 80 cm |
| 1 | 150 cm |
| 2 | > 200 cm |

Tabelle 1 kann entnommen werden, dass die erfinderischen Beispiele 1 und 2 eine deutlich bessere Schockwiderstandsfähigkeit aufweisen, was sich wiederum in der höheren Fallhöhe widerspiegelt.

Des Weiteren wurden die Verklebungsfestigkeiten für die Beispiele gemessen. Die Ergebnisse sind in Tabelle 2 dargestellt.

**Tabelle 2**

| Beispiele | Testmethode B bei 23 |
|---|---|
| Referenz 1 | 0.7 N/mm² |
| Referenz 2 | 1.3 N/mm² |
| 1 | 4.2 N/mm² |
| 2 | 3.8 N/mm² |

Tabelle 2 kann entnommen werden, dass die erfinderischen Beispiele 1 und 2 die höchste dynamische Scherfestigkeit aufweisen.

## Patentansprüche

1. Verfahren zur Herstellung eines Bauteils, welches wenigstens bereichsweise aus Metall gebildet ist, wobei
• zunächst ein Metallteil wenigstens bereichsweise mit einem aus einem hitzeaktivierbaren elastischen Material bestehenden Haftvermittler versehen wird, der sich zusammensetzt aus
- zumindest 30 Gew.-%, maximal 70 Gew.-% einer Naturkautschuk- und/oder Synthesekautschukkomponente,
- zumindest 30 Gew.-%, maximal 70 Gew.-% zumindest einer Reaktivharzkomponente, gewählt aus der Gruppe umfassend Epoxyharze, Novolak-Harze, Melamin-Harze, Terpenphenol-Harze, Phenolharze, Phenolresolharze, Polyisocyanate, so dass die Reaktivharzkomponente bei Temperaturen oberhalb 120 °C eine Vernetzungsreaktion mit sich selbst, mit anderen Reaktivharz Komponenten oder mit dem Naturkautschuk und/oder Synthesekautschuk initiiert,
wobei der Haftvermittler derart hitzeaktivierbar ist, dass er durch Wärmezufuhr einen haftklebrigen Zustand einnimmt,
• das mit dem Haftvermittler ausgestattete Metallteil im Spritzgussverfahren wenigstens teilweise mit einer thermoplastischen Kunststoffschicht umspritzt wird, wodurch Wärme eingetragen wird,
• so dass der Haftvermittler aktiviert wird und auf dem Metallteil und auf dem thermoplastischen Kunststoff haftet, und somit zwischen dem metallischen Bereich und der Kunststoffschicht eine stoffschlüssige Verbindung erzeugt wird.

2. Verfahren nach Anspruch 1, **dadurch gekennzeichnet, dass**
die Reaktivharzkomponente auch mit dem im Spritzgussverfahren eingebrachten Kunststoff eine chemische Reaktion eingeht.

3. Verfahren nach einem der vorangehenden Ansprüche, **dadurch gekennzeichnet, dass** der thermoplastische Kunststoff für das Spritzgussverfahren gewählt ist aus der Gruppe umfassend Polystyrol, Polymere aus Styrolacrylnitril (SAN), Acrylbutadienstyrol (ABS), Styrolbutadienstyrol (SBS), Acrylnitrilstyrolacrylnitril (ASA), Polyamid 6, Polyamid 6,6, Polybutadienterephthalat, Polyoxymethylen, Polyphthalamid (PPA), Polyarylamid, Polycarbonat, Polycarbonat/Acrylbutadienstyrol-Blends,Polyacetal, Polyurethan, Polypropylen, Polyethylen, Polymethylmethacrylat, Polyethylentherephthalat, Polyvinylchlorid.

4. Verfahren nach einem der vorangehenden Ansprüche, **dadurch gekennzeichnet, dass** die Metallteile mit Öffnungen und/oder Vertiefungen versehen sind, so dass der Kunststoff während des Spritzgusses eindringen bzw. durchdringen kann und so zusätzlich eine formschlüssige Verbindung ausgebildet wird.

## Claims

1. Method for producing a component formed at least regionally of metal, where
• first a metal part is provided at least regionally with an adhesion promoter which consists of a heat-activatable elastic material and is composed of
- at least 30% by weight, not more than 70% by weight, of a natural rubber and/or synthetic rubber component,
- at least 30% by weight, not more than 70% by weight, of at least one reactive resin component selected from the group encompassing epoxy resins, novolak resins, melamine resins, terpene-phenolic resins, phenolic resins, phenolic resole resins, polyisocyanates, such that the reactive resin component, at temperatures above 120°C, initiates a crosslinking reaction with itself, with other reactive resin components or with the natural rubber and/or synthetic rubber,
the adhesion promoter being heat-activatable such that it adopts a tacky state as a result of supply of heat,
• the metal part furnished with the adhesion promoter is surround-injected in an injection moulding process at least partly with a thermoplastic polymer layer, as a result of which heat is introduced,
• and so the adhesion promoter is activated and adheres to the metal part and to the thermoplastic polymer, and hence a material lock is produced between the metallic region and the polymer layer.

2. Method according to Claim 1, **characterized in that** the reactive resin component enters into a chemical reaction with the polymer introduced in the injection moulding process, as well.

3. Method according to either of the preceding claims, **characterized in that** the thermoplastic polymer for the injection moulding process is selected from the group encompassing polystyrene, polymers of styrene-acrylonitrile (SAN), acrylonitrile-butadiene-styrene (ABS), styrenebutadiene-styrene (SBS), acrylonitrile-styrene-acrylonitrile (ASA), nylon 6, nylon 6,6, polybutadiene terephthalate, polyoxymethylene, polyphthalamide (PPA), polyarylamide, polycarbonate, polycarbonate/acrylonitrile-butadiene-styrene blends, polyacetal, polyurethane, polypropylene, polyethylene, polymethyl methacrylate, polyethylene terephthalate, polyvinyl chloride.

4. Method according to any of the preceding claims, **characterized in that** the metal parts are provided with openings and/or recesses, and so the polymer is able to penetrate in or through during the injection-moulding operation, thus additionally forming a positive lock.

## Revendications

1. Procédé de fabrication d'une pièce qui est au moins partiellement formée de métal,
- une pièce métallique étant d'abord munie, au moins partiellement, d'un promoteur d'adhérence constitué par un matériau élastique thermoactivable, qui est composé
- d'au moins 30% en poids, d'au maximum 70% en poids d'un composant de caoutchouc naturel et/ou de caoutchouc de synthèse,
- d'au moins 30% en poids, d'au maximum 70% en poids d'au moins un composant de résine réactive, choisi dans le groupe comprenant les résines époxy, les résines novolaque, les résines de mélamine, les résines de terpène-phénol, les résines phénoliques, les résines de phénol-résol, les polyisocyanates, de manière telle que le composant de résine réactive initie, à des températures au-dessus de 120°C, une réaction de réticulation avec elle-même, avec d'autres composants de résine réactive ou avec le caoutchouc naturel et/ou le caoutchouc de synthèse,
le promoteur d'adhérence étant thermoactivable de manière telle qu'il entre dans un état poisseux par l'arrivée de chaleur,
- la pièce métallique apprêtée par le promoteur d'adhérence étant entourée, dans un procédé de moulage par injection, au moins partiellement, par injection, d'une couche de matériau synthétique thermoplastique, de la chaleur étant introduite,
- de manière telle que le promoteur d'adhérence est activé et adhère à la pièce métallique et au matériau synthétique thermoplastique et un composé de liaison de matière est ainsi obtenu entre la zone métallique et la couche de matériau synthétique.

2. Procédé selon la revendication 1, **caractérisé en ce que** le composant de résine réactive participe également à une réaction chimique avec le matériau synthétique introduit dans le procédé de moulage par injection.

3. Procédé selon l'une quelconque des revendications précédentes, **caractérisé en ce que** le matériau synthétique thermoplastique pour le procédé de moulage par injection est choisi dans le groupe comprenant le polystyrène, les polymères de styrène-acrylonitrile (SAN), d'acrylonitrile-butadiène-styrène (ABS), de styrène-butadiène-styrène (SBS), d'acrylonitrile-styrène-acrylonitrile (ASA), le polyamide 6, le polyamide 6,6, le poly(téréphtalate de butadiène), le polyoxyméthylène, le polyphtalamide (PPA), le polyarylamide, le polycarbonate, les mélanges polycarbonate/acrylonitrile-butadiène-styrène, le polyacétal, le polyuréthane, le polypropylène, le polyéthylène, le poly(méthacrylate de méthyle), le poly(téréphtalate d'éthylène), le poly(chlorure de vinyle).

4. Procédé selon l'une quelconque des revendications précédentes, **caractérisé en ce que** les pièces métalliques sont pourvues d'ouvertures et/ou de creux, de manière telle que le matériau synthétique peut y pénétrer ou les traverser et qu'il se forme ainsi en outre un composé de liaison de matière.
